# EUROPÄISCHE PATENTANMELDUNG

(11) **EP 4 703 924 A1**
(43) Veröffentlichungstag der Anmeldung: **04.03.2026**
(21) Anmeldenummer: 24196766.0
(22) Anmeldetag: 27.08.2024
(51) Int. Cl.: G06F 21/55, H04L 9/40

(54) **KRITIKALITÄTSBEWERTUNG EINES BETRIEBSZUSTANDS WÄHREND EINEM CYBER-SICHERHEITSRELEVANTEN EREIGNIS**

(71) Anmelder: Siemens Aktiengesellschaft, 80333 München (DE)
(72) Erfinder: Becker, Stefan, 91325 Adelsdorf (DE); Falk, Rainer, 85435 Erding (DE); Feist, Christian Peter, 80689 München (DE); Haasch, Axel, 91056 Erlangen (DE); Seeger, Guido, 91083 Baiersdorf (DE)
(74) Vertreter: Siemens Patent Attorneys

(57) **Zusammenfassung**

Die Erfindung betrifft ein Verfahren zum Ermitteln eines Schweregrads zugehörig zu einem Cyber-sicherheitsrelevanten Ereignis,
wobei das Verfahren die folgenden Schritten umfasst:
- Überwachen eines technischen Prozesses auf einem technischen System,
- Erfassen eines Cyber-sicherheitsrelevanten Ereignisses im Zusammenhang mit dem technischen Prozess zu einem Ereigniszeitpunkt,
- Ermitteln einer Kritikalitätsbewertung (5) des technischen Prozesses, wobei die Kritikalitätsbewertung (5) einen Betriebszustand des technischen Prozesses zu dem Ereigniszeitpunkt betrifft,
- Ermitteln eines Schweregrads zugehörig zu dem Cyber-sicherheitsrelevanten Ereignis in Abhängigkeit der Kritikalitätsbewertung (5).

Außerdem betrifft die Erfindung ein Computerprogrammprodukt eine technische Komponente (1) und ein technisches System.

## Beschreibung

Unabhängig vom grammatikalischen Geschlecht eines bestimmten Begriffes sind Personen mit männlicher, weiblicher oder anderer Geschlechteridentität mit umfasst.

### HINTERGRUND DER ERFINDUNG

### Gebiet der Erfindung

Die vorliegende Erfindung betrifft ein Verfahren zum Ermitteln eines Schweregrads zugehörig zu einem Cyber-sicherheitsrelevanten Ereignis. Die Erfindung betrifft außerdem ein zugehöriges Computerprogrammprodukt, eine technische Komponente und ein technisches System.

### Beschreibung des Stands der Technik

Das Erfassen und Überwachen von Cyber-sicherheitsrelevanten Ereignissen, auch "Security-Logdaten" und/oder "Security-Events" auf technischen Systemen ist wichtig, um stattfindende Angriffe frühzeitig zu erkennen und um erfolgte Angriffe analysieren zu können.

Ein Security-Event, d.h. ein Log-Eintrag, enthält üblicherweise neben der inhaltlichen Information zum Ereignis auch einen Zeitstempel, eine Angabe zum System, von dem das Event stammt, und eine zugeordnete Prioritätsinformation (Priority PRI). Durch den Parameter können z.B. Warnungen und Alarmmeldungen unterschieden werden. Syslog ist in RFC5424, "The Syslog Protocol", https://datatracker.ietf.org/doc/html/rfc5424 spezifiziert. Das Prioritätsfeld PRI repräsentiert die Facility, die z.B. Kernel-Log-Nachrichten, User-Space-Log-Nachrichten und Security-/Autorisierungs-Log-Nachrichten unterscheidet, und die Schwere (Severity), z.B. Warnung oder Alarm.

Security-Logdaten beziehen sich auf die IT-System-bezogene Funktionalität (z.B. Nutzer hat sich angemeldet), d.h. auf die die zugrundeliegende IT-Infrastruktur, des überwachten Systems. Die Analyse und Interpretation der Security-Logdaten erfolgt durch Security-Spezialisten, die IT-Security verstehen.

Security-Analysten, die Security-Logdaten auswerten, haben in der Praxis jedoch üblicherweise kaum Kenntnisse in der Automatisierungstechnik und vom jeweiligen technischen Prozess. Daher kann in der Praxis die OT-Relevanz von Security-Events üblicherweise nicht berücksichtigt werden.

Die Aufgabe der Erfindung besteht darin, eine Lösung für eine verbesserte Überwachung von technischen Systemen und technischen Prozessen bereitzustellen.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft ein Verfahren zum Ermitteln eines Schweregrads zugehörig zu einem Cyber-sicherheitsrelevanten Ereignis. Das Verfahren umfasst die im folgenden beschriebenen Schritte.

In einem Schritt des erfindungsgemäßen Verfahrens erfolgt ein Überwachen eines technischen Prozesses auf einem technischen System.

Der technische Prozess ist insbesondere ein industrieller Prozess, ein Steuerungsprozess, ein Automatisierungsprozess, ein Fertigungsprozess und/oder ein verfahrenstechnischer Prozess.

Der technische Prozess auf dem technischen System ist auch als ein Betrieb auf dem technischen System zu verstehen. Der Betrieb umfasst verschiede Betriebszustände. Es wird somit ein Betriebszustand und/oder aktueller Betriebszustand auf dem technischen System überwacht.

"Auf dem technischen System" bedeutet, dass der technische Prozess auf dem technischen System abläuft.

Das technische System ist insbesondere ausgebildet als ein industrielles System, ein Steuerungssystem, ein Automatisierungssystem, ein Fertigungssystem und/oder ein verfahrenstechnisches System.

In einem weiteren Schritt des erfindungsgemäßen Verfahrens erfolgt ein Erfassen (auch zu verstehen als "Ermitteln") eines Cyber-sicherheitsrelevanten (zu verstehen als die Sicherheit gegenüber Angriffen betreffend, Angriffs-relevant, (eng.) "security-relevant " und/oder "cybersecurity-relevant" und/oder "IT-security-relevant", hingegen nicht als (eng.) "safety-relevant") Ereignisses im Zusammenhang mit dem technischen Prozess zu einem Ereigniszeitpunkt.

"Im Zusammenhang mit dem technischen Prozess" bedeutet, dass das Ereignis mit Prozessschritten und/oder Prozessmitteln (Mittel zum Durchführen des technischen Prozesses) des technischen Prozesses verknüpft ist. Das Cyber-sicherheitsrelevante Ereignis ist aber nicht das operative Durchführen eines Prozessschrittes an sich und auch kein Hauptbestandteil des technischen Prozesses, vielmehr läuft das Cyber-sicherheitsrelevante Ereignis auf dem System ab, auf welchem auch der Prozess abläuft.

Cyber-sicherheitsrelevant ist das Ereignis, weil es sich auf die IT-bezogenen Funktionalität, d.h. die zugrundeliegende IT-Infrastruktur, des technischen Systems bezieht. Ein Beispiel für ein Cyber-sicherheitsrelevantes Ereignis ist eine Anmeldung (auch "Login") durch einen Nutzer. Sicherheitsrelevant ist das Ereignis aber nicht, weil es im Zusammenhang des Prozesses stattfindet.

"Zu einem Ereigniszeitpunkt" bedeutet, dass das Cyber-sicherheitsrelevanten Ereignis zu dem Ereigniszeitpunkt sattfindet. Der Ereigniszeitpunkt kann auch als Erfassungszeitpunkt (oder Ermittlungszeitpunkt) gesehen werden, da der Zeitpunkt der Erfassung und der Zeitpunkt des Ereignisses optional nahezu identisch sind.

In einem weiteren Schritt des erfindungsgemäßen Verfahrens erfolgt ein Ermitteln einer Kritikalitätsbewertung des technischen Prozesses, wobei die Kritikalitätsbewertung einen Betriebszustand des technischen Prozesses zu dem Ereigniszeitpunkt (d.h. zu dem Erfassungszeitpunkt des Cyber-sicherheitsrelevanten Ereignisses) betrifft.

Die Kritikalitätsbewertung bewertet die Kritikalität eines Betriebszustands (d.h. wie kritisch ein Betriebszustand ist) des technischen Prozesses zu dem Ereigniszeitpunkt. Die Kritikalitätsbewertung wird somit nur optional zum Ereigniszeitpunkt und damit nahezu zeitgleich mit dem Cyber-sicherheitsrelevanten Ereignis erfasst. In jedem Fall betrifft die Kritikalitätsbewertung den Betriebszustand des technischen Prozesses aber zu dem Ereigniszeitpunkt und wird optional retrospektiv ermittelt.

Der Betriebszustand des Prozesses ist auch als ein Prozessabschnitt betrachtbar. Dies ist insbesondere so zu verstehen, dass der technische Prozess mindestens einen Prozessabschnitt, vorzugsweise mehrere (mehr als einen) Prozessabschnitt, umfasst. Zu dem Ereigniszeitpunkt liegt der Prozessabschnitt (zu bewertender Prozessabschnitt) des technischen Prozesses vor, welchen die Kritikalitätsbewertung betrifft. Es wird somit die Kritikalität jenes Prozessabschnitts bewertet, welcher zu dem Ereigniszeitpunkt vorliegt. "Vorliegt" ist als "aktuell sein" zu verstehen. Insbesondere wird durch die Kritikalitätsbewertung auch bewertet, wie kritisch mit dem (zu bewertenden) Prozessabschnitt verknüpfte, insbesondere indirekt oder direkt darauffolgende, weitere Prozessschritte sind.

Die Kritikalitätsbewertung des Betriebszustandes ist durch einen Gerätehersteller vorkonfigurierbar und/oder über eine Konfigurationsschnittstelle durch einen Betreiber oder Integrator projektierbar.

"Kritisch" bedeutet, wie relevant und/oder wesentlich und/oder wie wichtig für den technischen Prozess an sich und/oder dessen Umsetzung und/oder dessen Realisierung und/oder dessen Ausführung.

Der Betriebszustand des Prozess beschreibt somit einen Fertigungszustand, einen Automatisierungszustand, einen Produktionszustand im Rahmen des technischen Prozesses. So wird einbezogen, dass in unterschiedlichen Betriebszuständen des Prozesses ein gleiches Cyber-sicherheitsrelevantes Ereignis unterschiedlich kritisch ist.

Die Kritikalitätsbewertung ist insbesondere als ein Zahlenwert und/oder eine Einstufung, insbesondere in eine Skala, ausgebildet.

Die Kritikalitätsbewertung ist auch als " Kritikalitätsinformation" bezeichenbar, da über die Bewertung eine Information zur Kritikalität gegeben wird. Auch ist die Kritikalitätsbewertung als "physical world priority and/or criticality information/evaluation" (Kritikalitätsbewertung der realen Welt) bezeichenbar, da die Kritikalitätsbewertung bewertet, wie kritisch, auch zu verstehen als wie wichtig und/oder wesentlich und/oder wie relevant, der Betriebszustand des technischen Prozesses und/oder der technische Betrieb in der realen Welt (der Welt des technischen Prozesses), außerhalb des bloßen zugrundeliegenden IT-Systems/IT-Infrastruktur, d.h. wie wichtig der technische Prozess im aktuellen Betriebszustand ist. Die Kritikalitätsbewertung bewertet insbesondere auch, welche Priorität der zu dem Ereigniszeitpunkt vorliegende Betriebszustand und/oder Betriebszustand (aktueller technischer Prozess oder Prozessabschnitt) hat.

In einem weiteren Schritt des erfindungsgemäßen Verfahrens erfolgt ein Ermitteln eines Schweregrads zugehörig zu dem Cyber-sicherheitsrelevanten Ereignis in Abhängigkeit der Kriti kalitätsbewertung.

Der Schweregrad ist auch bezeichenbar als "Prioritätsinformation" und/oder "severity-Information". Der Begriff "Prioritätsinformation" betont dabei mit welcher Priorität ein zu dem Ereigniszeitpunkt erfasstes Cyber-sicherheitsrelevantes Ereignis angegangen werden sollte. "Severity" ist zu verstehen als Ernsthaftigkeit.

In anderen Worten bewertet der Schwergrad (über die Abhängigkeit von der Kritikalitätsbewertung) somit das Cyber-sicherheitsrelevante Ereignis im Kontext des Betriebszustands des technischen Prozess, insbesondere des aktuellen Prozessabschnitts und/oder Betriebszustands.

Nach einem Aspekt der Erfindung wird ein Cyber-sicherheitsrelevantes Ereignis somit im Kontext der Kritikalität des technischen Prozess, insbesondere des aktuellen Prozessabschnitts und/oder Betriebszustands, betrachtet und dies durch den Schweregrad ausgedrückt.

Dadurch können bei einer nachgelagerten Analyse jene Cyber-sicherheitsrelevante Ereignisse automatisch ermittelt werden, die aus Prozesssicht kritisch sind, unabhängig von der Kritikalität aus Sicht des erfassten Cyber-sicherheitsrelevanten Ereignisses (Security-Events) an sich. Dies kann auch derart verstanden werden, dass zu konkreten Security-Events automatisch eine Risikobewertung (Schweregrads) aus Sicht des technischen Systems (Prozesssicht) erfolgt, abhängig von dessen aktuellem Betriebszustand/Betriebszustand.

Insbesondere wird eine Lösung bereitgestellt, durch die in Security-Event-Logs eine Information zum technischen System enthalten ist. Dies ermöglicht Security-Analysten, die Relevanz in Bezug auf den technischen Kontext zu berücksichtigen, in dem die IT-bezogenen Security-Events generiert wurden.

Aktuell beziehen sich Security-Logdaten hingegen nur auf die IT-System-bezogene Funktionalität (z.B. Nutzer hat sich angemeldet), d.h. auf die die zugrundeliegende IT-Infrastruktur, des überwachten Systems und stehen nicht im Zusammenhang mit dem zu realisierenden Nutzen (Zweck) des überwachten Systems, zum Beispiel auf einen Fertigungsprozess bei einem Automatisierungssystem (Operation Technology OT).

In einer Weiterbildung der Erfindung ist das Cyber-sicherheitsrelevante (zu verstehen als (eng.) "security-relevant " und/oder "cyber-security-relevant" und/oder "IT-security-relevant") Ereignis ausgebildet als:
- Ein erfolgreicher Authentisierungsvorgang, und/oder
- ein ungültiger Authentisierungsvorgang, und/oder
- ein erfolgreicher Zugriff, und/oder
- ein abgewiesener Zugriff, und/oder
- ein Dateizugriff, und/oder
- eine Änderung einer Berechtigung im Dateisystem, und/oder
- eine Änderung einer Zugangsberechtigung (insbesondere für eine Administrations- und/oder Bedienschnittstelle), und/oder
- ein Einrichten, Ändern und/oder Löschen eines Credentials (insbesondere eines kryptographischen Schlüssels und/oder eines digitalen Zertifikats), und/oder
- ein Starten und/oder ein Beenden einer Applikation, eines weiteren Prozesses und/oder einer App, und/oder
- ein Ändern einer Konfigurationseinstellung, und/oder
- ein Laden einer Projektierung und/oder einer Rezeptur, und/oder
- eine Installation, ein Aktualisieren und/oder ein Deinstallieren einer Software, und/oder
- ein Verbinden und/oder ein Entfernen eines Peripheriegeräts, und/oder
- eine Alarmmeldung eines Integritätsüberwachungssystems (insbesondere eine Runtime Health Check) und/oder eines Selbst-Tests, und/oder
- eine Meldung einer physikalischen Manipulation und/oder eines Öffnens eines Gehäuses (insbesondere ein Tamper-Alarm).

Das Cyber-sicherheitsrelevante Ereignis ist somit ausgebildet als ein Ereignis, das die Sicherheit gegenüber einem Angriff betrifft, insbesondere ein Angriffs-relevantes, (eng.) "security-relevant" und/oder "cyber-security-relevant " und/oder "IT-security-relevant" Ereignis, hingegen nicht als (eng.) "safety-relevant"

In einer weiteren Weiterbildung der Erfindung umfasst das technische System eine technische Komponente.

In einer weiteren Weiterbildung der Erfindung wird durch das Überwachen des technischen Prozesses (auch "eines Betriebs eines technischen Systems") auf dem technischen System die technische Komponente überwacht.

Nach dieser Ausführungsform wird speziell die technische Komponente des technischen Systems überwacht und somit ein Cyber-sicherheitsrelevantes Ereignis auf der technischen Komponente erfasst.

In einer weiteren Weiterbildung der Erfindung werden die Schritte des Verfahrens zumindest teilweise von der technischen Komponente durchgeführt.

Nach dieser Ausführungsform läuft der technische Prozess zumindest teilweise auf der technischen Komponente (oder "Komponente") ab, und die technische Komponente führt die Schritte des erfindungsgemäßen Verfahrens selbst durch, d.h. sie überwacht den Prozess, welcher auf ihr (zumindest teilweise) abläuft. Insbesondere erfolgt auch das Ermitteln der Kritikalitätsbewertung durch die Komponente selbst. Dies ist von Vorteil, da der Komponente der Betriebszustand des technischen Prozesses direkt vorliegt.

In einer weiteren Weiterbildung umfasst die Erfindung den weiteren Schritt: Erstellen (und insbesondere Ausgeben) einer Information (insbesondere in Form einer Nachricht, insbesondere in Form einer Log-Nachricht), wobei die Information das Cyber-sicherheitsrelevante Ereignis und den zugehörigen Schweregrad umfasst.

Nach dieser Ausführungsform wird eine Information zu dem Cyber-sicherheitsrelevanten Ereignis und dem zugehörigen Schweregrad erstellt und optional ausgegeben. Das Cyber-sicherheitsrelevante Ereignis und der zugehörige Schweregrad sind insbesondere eigenständige, separate Komponenten der Information. Der Schweregrad ist dem Cyber-sicherheitsrelevante Ereignis zugeordnet oder zumindest zuordenbar.

In einer weiteren Weiterbildung der Erfindung umfasst die Information außerdem die Kritikalitätsbewertung und/oder den Betriebszustand des technischen Prozesses.

Nach dieser Ausführungsform umfasst die Information außerdem die Kritikalitätsbewertung und/oder den Betriebszustand des technischen Prozesses. Es handelt sich dabei insbesondere um eigenständige und separate Komponenten (sicherheitsrelevantes Ereignis, Schweregrad und Kritikalitätsbewertung) der Information. Der Schweregrad und/oder die Kritikalitätsbewertung sind dem Ereignis zugeordnet oder zumindest zuordenbar. Diese Ausführungsform hat den Vorteil, dass dadurch weitere Daten bereitgestellt werden, welche dem ermittelten Schweregrad zugrunde liegen. So kann die Sicherheit erhöht werden, da nachfolgende Systeme eine größere Datengrundlage für ein Festlegen von Sicherheitsmaßnahmen haben.

In einer weiteren Weiterbildung der Erfindung erfolgt das Ermitteln des Schweregrads (Prioritätsinformation, "Severity-Information") außerdem in Abhängigkeit einer Art des Cyber-sicherheitsrelevanten Ereignisses. Die Art des Cyber-sicherheitsrelevanten Ereignisses kann auch als Kategorie des Cyber-sicherheitsrelevanten Ereignisses bezeichnet werden.

Nach dieser Ausführungsform hängt der ermittelte Schwergrad nicht nur von der Kritikalitätsbewertung, sondern zusätzlich auch von dem Cyber-sicherheitsrelevanten Ereignis ab, insbesondere von einer Art des Cyber-sicherheitsrelevanten Ereignisses. Der Schwergrad hängt somit von beidem der Kritikalitätsbewertung und auch dem Cyber-sicherheitsrelevanten Ereignis ab. In dieser Ausführungsform ist der Schweregrad auch als Gesamtprioritätsinformation und/oder "comprehensive serverity information" bezeichenbar.

Dies bedeutet insbesondere in Kombination mit vorherigen Ausführungsformen, dass sie Information (erstellt und insbesondere ausgegeben) die Komponenten Cyber-sicherheitsrelevantes Ereignis und Schweregrad und optional Kritikalitätsbewertung nicht separat und eigenständig umfasst, sondern dass der Schweregrad bereits das Cyber-sicherheitsrelevante Ereignis erfasst und das Cyber-sicherheitsrelevante Ereignis über den Schweregrad in der Information erhalten ist.

In einer weiteren Weiterbildung umfasst die Erfindung den weiteren Schritt: Bereitstellen des Schweregrads zugehörig zu dem Cyber-sicherheitsrelevanten Ereignis (zusammen mit dem entsprechendem Cyber-sicherheitsrelevanten Ereignis) an ein
Sicherheitsüberwachungssystem.

Das Sicherheitsüberwachungssystem ist insbesondere ausgebildet als ein Security-Monitoring-System und/oder ein SIEM-System (ein Security Information and Event Management System). Insbesondere wird der Schweregrad dem Sicherheitsüberwachungssystem in Form der in den vorherigen Ausführungsform genannten Information, insbesondere Nachricht und/oder Log-Nachricht, bereitgestellt. Insbesondere werden dem Sicherheitsüberwachungssystem Informationen, insbesondere Log-Nachrichten, von mehreren (einer Mehrzahl oder einer Vielzahl) von technischen System und/oder technischen Komponenten, insbesondere industriellen loT-Geräten, bereitgestellt und von dem Sicherheitsüberwachungssystem zusammengeführt und/oder analysiert.

In einer weiteren Weiterbildung umfasst die Erfindung den weiteren Schritt: Festlegen einer Durchführung einer Analyse des sicherheitskritischen Ereignis, wobei das Festlegen in Abhängigkeit des Schweregrades erfolgt.

Nach dieser Ausführungsform wird in Abhängigkeit des Schweregrades festgelegt, ob und ich welcher Form und/oder Tiefe eine Analyse des sicherheitskritischen Ereignis erfolgen soll. Darauf basierend erfolgt eine Reaktion auf das sicherheitskritische Ereignis ebenfalls in Abhängigkeit des Schweregrades.

In anderen Worten erlaubt es die vom aktuellen Betriebszustand abhängig Prioritätsinformation (Schweregrad), kritische Security-Events derjenigen industriellen loT-Geräte intensiver zu analysieren, die aktuell einen technischen Prozess in einem kritischen Betriebszustand steuern und überwachen. Dadurch kann eine automatische Analyse von Security-Events oder ein Tool zur unterstützen manuellen Analyse von Security-Events durch einen Security-Spezialisten diese Security-Events anders behandeln oder darstellen als gleichartige Security-Events, die von einem industriellen loT-Gerät stammen, bei dem sich der gesteuerte oder überwachte technische Prozess beim Ermitteln des Security-Events in einem weniger kritischen Betriebszustand befunden hat.

Insbesondere wird die Analyse durch ein Security-Monitoring-System (z.B. ein SIEM-System, Security Information and Event Management) durchgeführt.

In einer weiteren Weiterbildung der Erfindung erfolgt das Ermitteln der Kritikalitätsbewertung:
- Regelbasiert, und/oder
- basierend auf einer Mustererkennung, und/oder
- basierend auf Sensordaten und/oder Aktuatordaten des technischen Prozesses, und/oder
- basierend auf Prozessdaten des technischen Prozesses,
- und/oder
- mittels einer "Artificial Intelligence Inference", und/oder
- mittels einer Simulation, und/oder
- mittels einer Datenauswertung und/oder Datenanalyse.

In einem einfachen Fall können ein Vergleich mit Wertebereichen von Sensordaten und/oder Aktuatordaten erfolgen (z.B. Temperatur, Druck, Geschwindigkeit, Kraft), oder es können Dynamikparameter ermittelt und bewertet werden (z.B. Beschleunigung, Temperaturanstieg).

Weiterhin kann in einer Variante eine Simulation des technischen Prozesses verwendet werden, um die Kritikalität von möglichen beziehungsweise zu erwartenden künftigen Betriebszuständen abzuschätzen.

Die Erfindung umfasst außerdem ein Computerprogrammprodukt, umfassend ein Computerprogramm, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Die Erfindung umfasst außerdem eine technische Komponente, insbesondere ein Gerät, aufweisend ein erfindungsgemäßes Computerprogrammprodukt.

Die technische Komponente ist insbesondere ein loT-Gerät, insbesondere ein industrielles IoT-Gerät, ein Steuergerät und/oder ein PLC. Die technische Komponente steuert und/oder überwacht ein technisches System, z.B. eine Werkzeugmaschine und/oder einen verfahrenstechnischen Prozess.

Die Erfindung umfasst außerdem technisches System, insbesondere ein industrielles System und/oder ein Fertigungssystem, aufweisend eine erfindungsgemäße technische Komponente.

### KURZE BESCHREIBUNG DER ZEICHNUNG

Die Besonderheiten und Vorteile der Erfindung werden aus den nachfolgenden Erläuterungen mehrerer Ausführungsbeispiele anhand der schematischen Zeichnung ersichtlich.

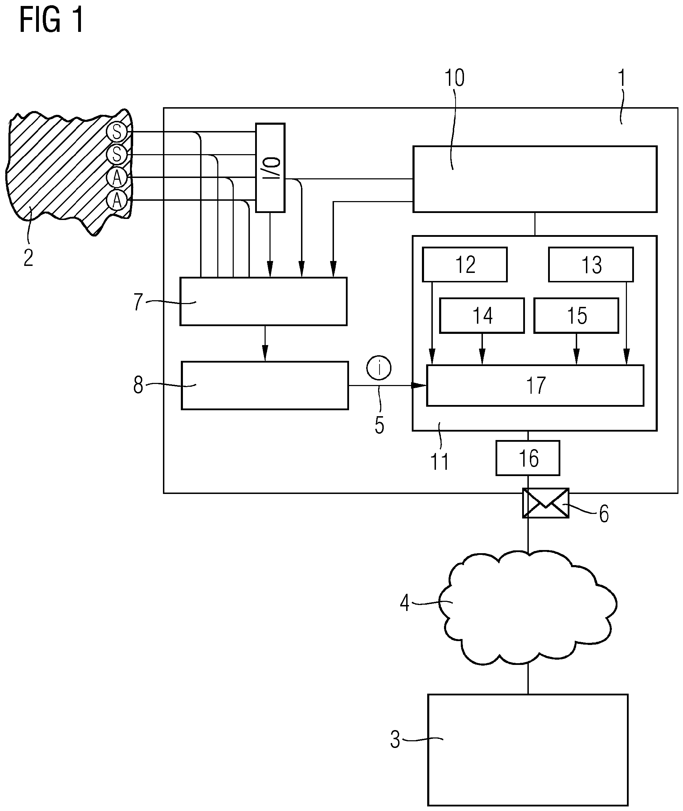

Es zeigt
- Fig. 1: eine erfindungsgemäße technische Komponente.

### DETAILLIERTE BESCHREIBUNG DER ERFINDUNG

Fig. 1 zeigt ein Ausführungsbeispiel mit einem industriellen loT-Gerät 1 (einer technischen Komponente 1), das einen SIEM-System 3 oder einer Log-, Monitoring- und Reporting-Plattform 3 wie beispielsweise Splunk 3 Security-Event-Information 6 übermittelt, die eine Kritikalitätsinformation 5 eines Betriebszustands eines gesteuerten/technischen Systems (nicht dargestellt, Bestandteil der realen Welt 2) umfassen.

Das industrielle loT-Gerät 1 weist als Hauptfunktion eine Steuerungs-/Überwachungsfunktion 10 (physical world control function 10) auf, um über die I/O-Schnittstelle (I/O: input output) eine Zustandsinformation 7 des technischen Systems über Sensoren S zu erfassen und über Aktuatoren A zu beeinflussen.

Das industrielle loT-Gerät 1 weist weiterhin Betriebsfunktionen 11 auf für ein Gerätemanagement 12 (z.B. zum Einrichten der Gerätekonfiguration, zum Einspielen von Firmware-Updates), eine Bedienschnittstelle 13 (Device Ul; Ul: User Interface - z.B. Tasten und Display, oder ein Touch-Screen), eine Selbsttest-Funktion 14, um die korrekte Funktion zu überprüfen, und eine Diagnosefunktion 15. Diese Betriebsfunktionen 11 können über die Netzwerkschnittstelle 16 kommunizieren, z.B. mit einem übergeordneten Produktionsmanagementsystem oder einem Gerätemanagementsystem (nicht dargestellt). Weiterhin weisen die Betriebsfunktionen 11 eine Logging-Funktion 17 (log function 17) auf, durch die das industrielle loT-Gerät 1 Log-Daten, insbesondere Informationen zu Security-relevanten Ereignissen (nicht dargestellt), einem SIEM-System 3 bereitstellt. Die Information zu den Log-Daten kann insbesondere von einer der Betriebsfunktionen 11 stammen, jedoch auch von der Steuerungs-/Überwachungsfunktion 10.

Nach diesem Ausführungsbeispiel weist das industrielle loT-Gerät 1 weiterhin eine Einheit zum Erfassen des Betriebszustands 7 der realen, physikalischen Welt 2 (auch als "pwState Monitor" 7 bezeichenbar) und eine Einheit zur Kritikalitätsbewertung 8 (auch als "pwCriticality Estimator" 8 bezeichenbar) des ermittelten Betriebszustands des technischen Systems der realen Welt 2 ("physical world" 2) auf. Diese Einheiten sind dazu ausgebildet, die oben genannte Information zu den Security-relevanten Ereignissen um eine Information zur Kritikalität 5 des technischen Systems (auch "physical world criticality" 5 (pwCrit 5)) zu erweitern. D.h. abhängig von der Einheit zur Kritikalitätsbewertung 8 ermittelten "physical world criticality" 5 (pwCrit 5) wird eine Information zu einem Schweregrad 6 (Security-Event-Information 6) erstellt und über die Netzwerkschnittstelle 16 und über ein Kommunikationsnetzwerk 4 einem SIEM-System 3 übermittelt, das bei der Analyse und Bewertung der Security-relevanten Events zusätzlich auch die Kritikalität des technischen Systems berücksichtigt.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Verfahren zum Ermitteln eines Schweregrads zugehörig zu einem Cyber-sicherheitsrelevanten Ereignis,
wobei das Verfahren die folgenden Schritten umfasst:
- Überwachen eines technischen Prozesses auf einem technischen System,
- Erfassen eines Cyber-sicherheitsrelevanten Ereignisses im Zusammenhang mit dem technischen Prozess zu einem Ereigniszeitpunkt,
- Ermitteln einer Kritikalitätsbewertung (5) des technischen Prozesses, wobei die Kritikalitätsbewertung (5) einen Betriebszustand des technischen Prozesses zu dem Ereigniszeitpunkt betrifft,
- Ermitteln eines Schweregrads zugehörig zu dem Cyber-sicherheitsrelevanten Ereignis in Abhängigkeit der Kritikalitätsbewertung (5).

2. Verfahren nach Anspruch 1,
wobei das Cyber-sicherheitsrelevante Ereignis ausgebildet ist als:
- Ein erfolgreicher Authentisierungsvorgang, und/oder
- ein ungültiger Authentisierungsvorgang, und/oder
- ein erfolgreicher Zugriff, und/oder
- ein abgewiesener Zugriff, und/oder
- ein Dateizugriff, und/oder
- eine Änderung einer Berechtigung im Dateisystem, und/oder
- eine Änderung einer Zugangsberechtigung, und/oder
- ein Einrichten, Ändern und/oder Löschen eines Credentials, und/oder
- ein Starten und/oder ein Beenden einer Applikation, eines weiteren Prozesses und/oder einer App, und/oder
- ein Ändern einer Konfigurationseinstellung, und/oder
- ein Laden einer Projektierung und/oder einer Rezeptur, und/oder
- eine Installation, ein Aktualisieren und/oder ein Deinstallieren einer Software, und/oder
- ein Verbinden und/oder ein Entfernen eines Peripheriegeräts, und/oder
- eine Alarmmeldung eines Integritätsüberwachungssystems und/oder eines Selbst-Tests, und/oder
- eine Meldung einer physikalischen Manipulation und/oder eines Öffnens eines Gehäuses.

3. Verfahren nach einem der vorhergehenden Ansprüche,
wobei das technische System eine technische Komponente (1) umfasst.

4. Verfahren nach Anspruch 3,
wobei durch das Überwachen des technischen Prozesses auf dem technischen System die technische Komponente (1) überwacht wird.

5. Verfahren nach Anspruch 3 oder Anspruch 4,
wobei die Schritte des Verfahrens zumindest teilweise von der technischen Komponente (1) durchgeführt werden.

6. Verfahren nach einem der vorhergehenden Ansprüche,
mit dem weiteren Schritt:
- Erstellen einer Information (6), wobei die Information (6) das Cyber-sicherheitsrelevante Ereignis und den Schweregrad (5) umfasst.

7. Verfahren nach Anspruch 6,
wobei die Information (6) außerdem die Kritikalitätsbewertung (5) und/oder den Betriebszustand des technischen Prozesses umfasst.

8. Verfahren nach einem der vorhergehenden Ansprüche,
wobei das Ermitteln des Schweregrads außerdem in Abhängigkeit des Cyber-sicherheitsrelevanten Ereignisses erfolgt.

9. Verfahren nach einem der vorhergehenden Ansprüche,
mit dem weiteren Schritt:
- Bereitstellen des Schweregrads zugehörig zu dem Cyber-sicherheitsrelevanten Ereignis an ein Sicherheitsüberwachungssystem (3).

10. Verfahren nach einem der vorhergehenden Ansprüche,
mit dem weiteren Schritt:
- Festlegen einer Durchführung einer Analyse des sicherheitskritischen Ereignis, wobei das Festlegen in Abhängigkeit des Schweregrades erfolgt.

11. Verfahren nach einem der vorhergehenden Ansprüche,
wobei das Ermitteln der Kritikalitätsbewertung (5):
- Regelbasiert, und/oder
- basierend auf einer Mustererkennung, und/oder
- basierend auf Sensordaten und/oder Aktuatordaten des technischen Prozesses, und/oder
- basierend auf Prozessdaten des technischen Prozesses,
- und/oder
- mittels einer "Artificial Intelligence Inference", und/oder
- mittels einer Simulation, und/oder
- mittels einer Datenauswertung und/oder Datenanalyse
erfolgt.

12. Computerprogrammprodukt, umfassend ein Computerprogramm, wobei das Computerprogramm in eine Speichereinrichtung einer Recheneinheit ladbar ist, wobei mit dem Computerprogramm die Schritte eines Verfahrens nach einem der Ansprüche 1 bis 11 ausgeführt werden, wenn das Computerprogramm auf der Recheneinheit ausgeführt wird.

13. Technische Komponente (1) aufweisend ein Computerprogrammprodukt nach Anspruch 12.

14. Technisches System aufweisend eine technische Komponente (1) nach Anspruch 13.
